# EUROPEAN PATENT SPECIFICATION

(11) **EP 3 209 898 B1**
(45) Date of publication and mention of the grant of the patent: **03.06.2020**
(21) Application number: 14792984.8
(22) Date of filing: 24.10.2014
(51) Int. Cl.: F16F 13/08, F16F 13/10

(54) **DAMPING FLUID DEVICES**
DÄMPFUNGSFLÜSSIGKEITSVORRICHTUNGEN
DISPOSITIFS À FLUIDE D'AMORTISSEMENT

(43) Date of publication of application: 30.08.2017
(73) Proprietor: LORD Corporation, Cary, NC 27511 (US)
(72) Inventor: THOMPSON, Scott K., Asheville, NC 28801 (US); MCELDOWNEY, Nick C., Lake City, Pennsylvania 16423 (US); MACIAK, James A., Erie, Pennsylvania 16506 (US)
(74) Representative: Murgitroyd & Company
(86) International application number: PCT/US2014/062093
(87) International publication number: WO 2016/064413

(56) References cited:
- EP-A1- 0 669 484
- EP-A1- 1 950 451
- US-A- 5 984 036
- US-A1- 2003 047 882

## Description

### TECHNICAL FIELD

The subject matter disclosed herein relates to devices, systems, and methods for reducing and controlling gross vehicle cab vibrations. More particularly, the subject matter disclosed herein relates to devices, systems and methods for reducing and controlling movement in off-highway cabs, particularly for reducing vibration and increasing high-frequency isolation in off-highway cabs.

### BACKGROUND

Gross off-highway cab movement and vibration are particularly troublesome in that they can cause fatigue and wear on equipment. In cabs of industrial vehicles or construction equipment, vibrations are particularly problematic in that they create multiple fatigue and wear points. In addition to the fatigue and wear on the equipment, the same movement and vibration causes fatigue to the operator and interferes with the operator's ability to operate the equipment.

In contrast to narrowband damping, which provides for a narrow vibrational band and/or only provides damping at either low or high vibrational frequencies, broadband damping provides damping across a large spectrum of vibrational frequencies. Broadband damping is usually achieved by using annular damping and a relatively high viscosity fluid, which results in damping across a wide range of frequencies.

European Patent Application No. EP1950451 A1 discloses a liquid sealed mount composed of a vibration damping body and a ring-shaped elastic body, the vibration damping body is attached to a vehicle body, and the ring-shaped elastic body absorbing vibration is incorporated between the vehicle body frame and a bottom-wall side member. According to the disclosure, since the vehicle body frame receives a load, a case is not deformed.

European Patent Application No. EP0669484 A1 discloses a fluid-filled mount using an elastic body and a viscous fluid to obtain a great damping force has for its object to facilitate the filling of the viscous fluid and to considerably improve the sealability, and comprises a case having a mounting plate with mounting holes and fixing claws together with a cup, a cylindrical case having a mounting plate with mounting holes together with a cylinder, a stud having an axial through hole for viscous fluid filling and also having a tapped hole provided in one end of its axial through hole and a damping plate is fixed to its other end, and an elastic body having the said cylindrical case embedded in it and the said stud secured in its center hole.

United States Patent Publication No. 2003/047882 A1 discloses a liquid-sealed mount capable of obtaining damping performance. The mount includes an elastic body, a stud penetrating through the elastic body, a case, which is in a cylindrical shape with one end side being opened and with a bottom face on the other end side, and houses a viscous liquid inside, and in which the viscous liquid is scaled by fitting the elastic body and the stud into the opening at the one end side, a damping member attached to the stud in a state in which the damping member submerges in the viscous liquid; and a wall surface of a portion of the case, which submerges in the viscous liquid, is formed so that an inner diameter gradually decreases toward a lower position and an angle of inclination is different in an upper part from a lower part; and an outer circumferential side surface of the damping member opposes the inclined surface of the case.

United States Patent No. 5,984,036 A discloses a rear side of an operator's cabin body is resiliently supported by a rubber mount, and a front side of the operator's cabin body is resiliently supported by a spring mount, of which a spring constant is set to be smaller than that of the rubber mount. Accordingly, a vibration transmissibility of pitching transmitted from a revolving frame to the operator's cabin body can be kept small, and pitching is damped by an oil damper which constitutes the rubber mount. Further, bounce and rolling transmitted to the operator's cabin body are converted into pitching for attenuation of vibration.

There is a need for an improved device that reduces gross vibration and movement in off-highway vehicle cabs, yet is durable and/or can be manufactured in a cost-effective manner.

### SUMMARY

In accordance with this disclosure, improved damping fluid mount devices, systems and methods are provided, for example with a damping fluid mount and a method or process for assembling a fluid mount easily adaptable to different static load and damping fluid mount configurations.

In one aspect, the present subject matter provides a damping fluid mount, which includes an inner member, an elastomer section that is affixed to an outer surface of the inner member, an annular damping plate attached to a bottom portion of the inner member, a cup containing viscous fluid positioned about the elastomer section and the damper plate, and a collar positioned about a portion of the elastomer section, the collar having an inner diameter that is less than an outer diameter of the damper plate.

In another aspect, a damping fluid mount includes an inner member, an elastomer section that is affixed to an outer surface of the inner member, an annular damping plate attached to a bottom portion of the inner member, a cup containing viscous fluid positioned about the elastomer section and the damper plate, and a collar positioned about the portion of the cup that is crimped. In this configuration, however, a portion of the cup is radially crimped into a precompressed portion of the elastomer section, an inner diameter of the portion of the cup that is crimped being less than an outer diameter of the annular damping plate, and the collar having an inner diameter that is less than the outer diameter of the damper plate.

In yet another aspect, a method for assembling a damping fluid mount is provided. The method includes coupling an elastomer section to an outer surface of an inner member, coupling a damping plate to a bottom portion of the inner member, inserting the elastomer section coupled to the inner member and to the damping plate into a cup, wherein the cup contains a quantity of viscous fluid, and positioning a collar about a portion of the elastomer section, the collar having an inner diameter that is less than an outer diameter of the damper plate.

Although some of the aspects of the subject matter disclosed herein have been stated hereinabove, and which are achieved in whole or in part by the presently disclosed subject matter, other aspects will become evident as the description proceeds when taken in connection with the accompanying drawings as best described hereinbelow.

### BRIEF DESCRIPTION OF THE DRAWINGS

Figure 1 is a cutaway perspective view of a damping fluid mount according to an embodiment of the presently disclosed subject matter.
Figure 2 is a cutaway perspective view of a damping fluid mount according to an alternative embodiment of the presently disclosed subject matter.
Figures 3-6 are sectional views showing in detail a method of assembling a damping fluid mount according to an embodiment of the presently disclosed subject matter.

### DETAILED DESCRIPTION

The present subject matter provides improvement to vibration damping fluid mounts for use in off-highway vehicle cabs, particularly those incorporating a roll-over protection structure (ROPS). The disclosed devices and methods manufacture a damping fluid mount that creates an overlap between the damping plate held within the fluid mount and a ROPS support collar that is provided to carry the required ROPS loading. In some embodiments, this interleaved ROPS support collar is provided in combination with a crimped cup design that pre-compresses the elastomer section of the fluid mount, which provides a fluid mount with superior sealing, improved fatigue life, increased durability and improved high-frequency isolation.

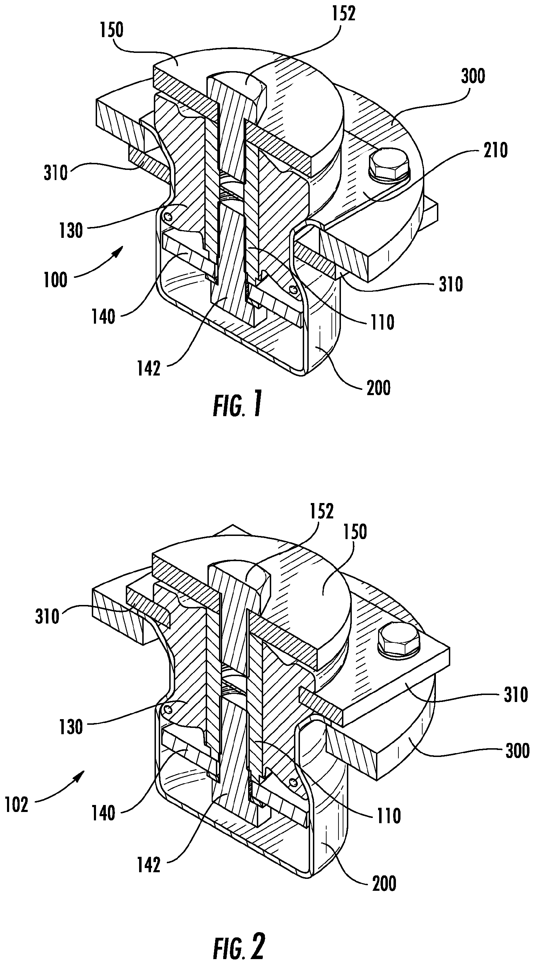

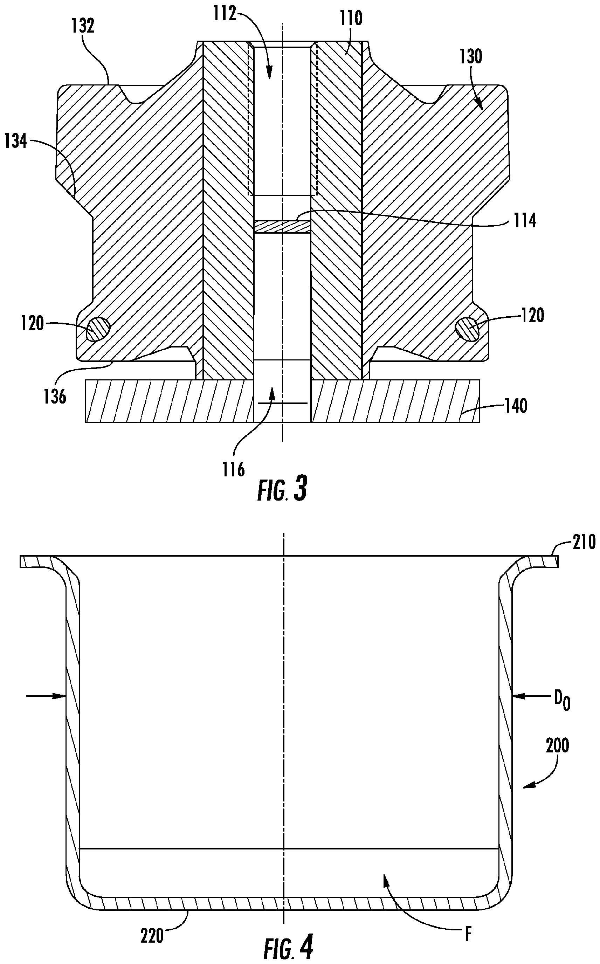

In one exemplary configuration shown in Figure 1, for example, the present subject matter provides a broadband damping fluid mount, generally designated **100,** contained by an outer cup **200.** Similarly, Figure 2 illustrates an alternative configuration for a broadband damping fluid mount, generally designated **102.** In either configuration, the broadband damping fluid mount **100** or **102** comprises a bonded core that includes an inner member **110** and an elastomer section **130,** where an inner surface of the elastomer section **130** is coupled (e.g. bonded, adhered, friction fit, etc.) to an outer surface of the inner member **110** as shown in Figure 3. In some embodiments, this bonded core is manufactured by providing the inner member **110** with proper surface preparation and adhesive applied, and adding the inner member **110** into a mold. Proper surface preparation is known those skilled in the relevant art. The mold is closed, and elastomer material is injected into the cavity and cured, thus curing the elastomer and adhesive.

As further illustrated in Figure 3, a damping plate **140** is attached at a bottom portion of the inner member **110.** For example, in the embodiments illustrated in Figures 1 and 2, the damping plate **140** is attached to a bottom portion of the inner member **110** by a damping plate fastener **142** (e.g., a bolt). In particular, as shown in Figure 3, the inner member **110** includes a lower blind threaded hole **116** into which the damping plate fastener **142** can be inserted and secured in place after positioning the damping plate **140** against the bottom portion of the inner member **110.** Alternatively, those having skill in the art will appreciate that other similar approaches and structures in which the damping plate **140** is fixedly attached to the inner member **110** can be sufficient. The thickness of the damping plate **140** is selected to handle the rated ROPS load, and the materials of the inner member **110,** the damping plate **140,** and the damping plate fastener **142** are selected to meet the necessary mechanical and charpy impact resistance for ROPS compliance. For example, the design of these elements are able to be optimized for the largest 1G static load rating for a given application (e.g., for a 250 kg mount) while still being able to achieve mounts with a 1G load rating in lower loading configurations (e.g., as low as 100 kg or less) by simply changing the modulus of the elastomer used to form the elastomer section **130.** This allows an entire range of mounts to be manufactured by only altering the rubber modulus used to form the bonded unit.

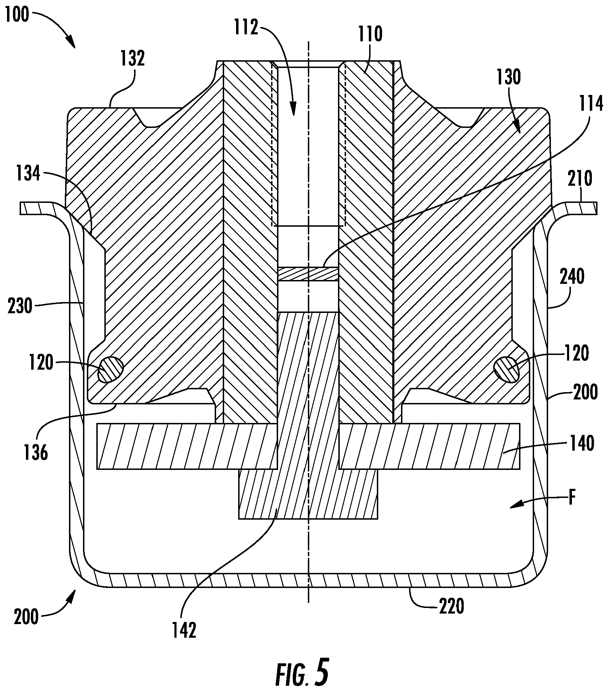

As indicated above, the assembled combination of the inner member **110**, the elastomer section **130,** and the damping plate **140** are contained within an outer cup **200,** an example of which is illustrated in Figure 4. In the configuration shown in Figure 4, the outer cup **200** has a substantially cylindrical shape having an original cup diameter **D₀** that extends between an open upper portion on which a flange **210** is formed and a closed bottom **220.** As shown in Figure 5, a portion of the bonded core that includes the inner member **110,** the elastomer section **130,** and the damper plate **140** is snuggly contained within the outer cup **200.** In some embodiments, a remaining portion of the inner member **110** and the elastomer section **130** extend out of the outer cup **200** above the flange **210.**

In any configuration, the outer cup **200** additionally contains a quantity of viscous fluid **F,** which provides damping in the fluid mounts **100** and **102.** For example, when the bonded core is placed within outer cup **200,** the quantity of fluid **F** is disposed beneath damping plate **140.** Thus, the quantity of viscous fluid **F** and the damping plate **140** act as a dashpot damper by allowing fluid flow around an outer diameter of the damping plate **140** (i.e. annular damping). Where holes (not shown) are included in the damping plate **140,** the damping plate **140** further exhibits orifice damping as the quantity of viscous fluid **F** flows through the holes in the damping plate **140.** In this case, the dashpot damper dissipates the overall energy of the system and creates softer mount stiffness for equivalent motion control. In some embodiments, air is present on both sides of the damping plate **140** (i.e., above the damping plate **140,** but below a bottom of the elastomer section **130,** and below the damping plate **140** in the portion of the outer cup **200** in which the viscous fluid **F** is provided).

However, increasing the overall damping of a system can result in increased dynamic stiffness. Therefore, in order to increase overall system damping and maintain isolation, a low-amplitude decoupler can be used to reduce the damping at low-amplitude, high frequency input. One means of achieving decoupling is to have the bottom **220** of the outer cup **200** be a substantially flat surface. The flat surface provides decreased volume stiffness for the quantity of viscous fluid **F** disposed below the damping plate **140,** thereby providing improved high-frequency isolation. Alternatively or in addition, the volume of the viscous fluid **F** is selected so that a certain percentage of air is present in the fluid cavity to allow deflection even at frequencies at which the damping fluid **F** may get very stiff (such as at the annular and/or orifice damping interfaces).

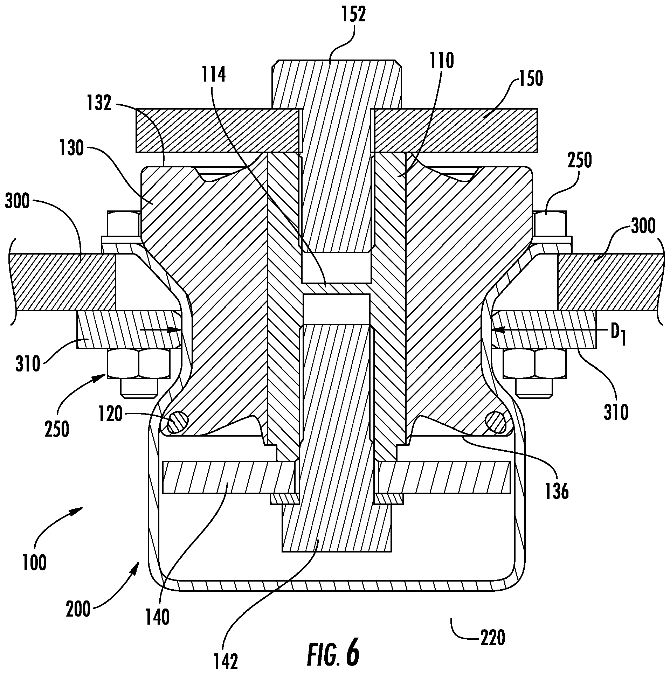

The outer cup **200** is further coupled to a supporting frame structure **300,** such as a vehicle frame of an off-highway vehicle. In the embodiment shown in Figure 1, for example, a collar **310** is secured to the flange **210** (e.g., by a bolted connection **250** shown in Figure 6), and the collar **310** connects the outer cup **200** to the supporting frame structure **300.** In the particular configuration shown in Figure 1, for example, the collar **310** is positioned about the elastomer section **130** below the flange **210.** Alternatively, in the further exemplary configuration shown in Figure 2, the broadband damping fluid mount **102** has the collar **310** positioned about the elastomer section **130** above the flange **210.** In some embodiments, the collar **310** includes two substantially semi-circular collar elements that are positioned on either side of the elastomer section **130.** In any configuration, the collar **310** is sized to have an inner diameter that is less than an outer diameter of the damper plate **140.** In this way, even if elastomeric failure of the elastomer section **130** were to occur, the inner member **110** would be prevented from being removed from the outer cup **200** by the overlapping dimensions of the damping plate **140** and the collar **310.** In this way, the additional load-bearing capacity enabled by the collar **310** allows the fluid mounts **100** and **102** to carry the required ROPS loads for a given vehicle configuration and/or cab structure. As a result, the ROPS capability of the mounts to be added or removed by selectively including collar **310.** This allows the ROPS capability of these mounts to be truly modular by selectively incorporating this element into the mount configuration.

In addition, in the embodiments shown in Figures 1 and 2, a portion of the elastomer section **130** is radially precompressed to have an elastomer contour **134** that varies along a longitudinal axis of the elastomer section **130,** and a corresponding portion of the outer cup **200** surrounding the precompressed portion of the elastomer section **130** is radially crimped to a decreased cup diameter **D₁** to substantially follow the shape of the elastomer contour **134** and reinforce the radial precompression. In some embodiments, for example, the elastomer section **130** is precompressed by the action of crimping the corresponding portion of the outer cup **200.** Alternatively, the elastomer section **130** can be precompressed directly by the process by which the crimping of the outer cup **200** is achieved. Regarding the manner in which the crimping is achieved, in some embodiments, a collet swage machine is used to radially crimp cup **200,** which achieves large deformations in the outer cup **200** while minimizing distortion and wall thinning. Alternatively, in other embodiments, hydro-forming is used to crimp the outer cup **200.** Roll forming is another method of crimping the outer cup **200,** but it has the risk of thinning the cup wall and limiting the depth of the allowable deformation in the outer cup **200.**

Regardless of the particular method used, the radially crimping of the outer cup **200** securely contains the bonded core within. In addition, the fluid mounts **100** and **102** exhibit increased durability from radially crimping the outer cup **200,** since radially crimping the outer cup **200** both reinforces the radially precompression of the elastomer section **130** and radially crimps an inner surface of the outer cup **200** such that the elastomer contour **134** and the inner surface of the outer cup **200** have a substantially similar contour. In one aspect, as shown in Figures 3, 5, and 6, the elastomer contour **134** is formed with a diameter that varies from a point substantially below the flange **210** of outer cup **200** to a point on the elastomer contour **134** above the damping plate **140.** The transitions on the elastomer contour **134** from one diameter to another can be substantially smooth. Therefore, when the outer cup **200** is crimped into the elastomer contour **134,** the outer cup **200** mimics the elastomer contour **134** and is radially crimped in at least two places, such that a crimped area is formed that is substantially parallel with the longitudinal axis of the inner member **110.** At the crimped area, the outer cup **200** has the narrowest diameter (e.g., crimped cup diameter **D₁** illustrated in Figure 6). Additionally, the outer cup **200** is crimped to mimic the elastomer contour **134,** such that the external surface **240** of the outer cup **200** has a smooth transitional contour from the non-crimped areas of the outer cup **200** to the crimped area of the outer cup (and vice versa), in view of the smooth transitional elastomer contour **134.** Alternatively, in some configurations, elastomer contour **134** has a more abrupt transitional profile, and thus when the outer cup **200** is crimped to mimic the elastomer contour **134,** the external surface **240** of the outer cup **200** has a more abrupt transitional contour from the non-crimped areas of the outer cup **200** to the crimped area of the outer cup (and vice versa).

It is noted, however, that the substantial similarity of contours between the elastomer contour **134** and the inner surface of the outer cup **200** are not absolutely necessary due to the incompressible nature of elastomer section **130.** For example, the crimp axial length may actually be longer than the axial length of the molded undercut, thereby axially stretching the elastomer at the interface. In any configuration, the relative motion at the interface between the elastomer contour **134** and the outer cup **200** are substantially minimized. A precompressed friction interface has been previously used for elastomeric mounts, but precompressed friction interface are not known to be used for elastomeric mounts used in fluid mounts, as disclosed herein.

Radial precompression of the elastomer section **130** further reduces relative motion, improves fatigue life, and provides superior sealing of the fluid mount **100** or **102** (e.g., by creating a beadles seal between the elastomer section **130** and the outer cup **200** to seal the viscous fluid **F** within the outer cup **200**). The particular degree of precompression can be designed to provide the desired response in the elastomer section **130.** In some configurations, for example, radial precompression of the elastomer section **130** ranges from approximately 5% of the original (i.e., uncompressed) elastomer section wall thickness to approximately 30% of original elastomer section wall thickness. In some particular examples, the percentage of radial precompression is between approximately 12% and 20% of the original elastomer wall thickness. That being said, those having skill in the art will recognize that the amount of precompression is adjustable to adapt fluid mount **100** or **102** to different desired static and/or snubbing load responses. In addition, by selecting the properties of the elastomer section **130** prior to manufacture, the 1G static load rating of the fluid mount **100** or **102** can be adjusted from its largest load rating to its smallest load rating (e.g., by adjusting the modulus of the elastomer section 130).

Furthermore, in some embodiments, a ring **120** is encapsulated or bonded within the elastomer section **130** and, in conjunction with the radially precompressed elastomer section **130,** increases durability and damping of the fluid mounts **100** and **102.** In particular, where the ring **120** is integrated within the elastomer contour **134,** between approximately 12% and 20% radial precompression of the elastomer section **130** results in a significant reduction in relative motion at the interface, such that the axial position at the interface will not substantially change over time, which will result in an improved durability resulting from reduced wear at the interface. In other aspects, the fluid mounts **100** and **102** do not include the ring **120.** Instead, these embodiments rely substantially on the radial crimp of the outer cup **200** and the elastomer section **130** and on the collar **310** to reduce relative motion at the crimped interface. In addition, in some configurations, the outer cup **200** stretches the elastomer contour **134** in the axial direction to minimize the relative motion at the interface. By integrating the ring **120** into the elastomer contour **134,** however, the relative motion at the interface is diminished, thus providing even more increased durability of the fluid mounts **100** and **102.** Similarly, a second ring (not shown) can be added above the elastomer contour **134** and provide a higher reduction in relative motion.

Further, radial precompression of the elastomer section **130** provides improved sealing of the viscous fluid F inside the fluid mounts **100** and **102.** Traditionally, sealing a specified volume of viscous fluid within an interior of a fluid mount has been accomplished by using sealing beads incorporated into the outer contours of the elastomer. Maintaining the specified volume of viscous fluid within the fluid mount is desirable because of the damping accomplished by the viscous fluid and the damping plate acting in combination as a dashpot damper. Even small quantities of leakage of the viscous fluid impacts the efficiency and ability of the fluid mount to control and reduce gross vehicle cab movement and vibration. Therefore, radially precompressing the elastomer section **130** provides superior sealing of the broadband damping fluid mounts **100** and **102,** as disclosed herein, because the elastomer section **130** is compressed to a higher percentage and over a larger area than traditional sealing beads typically allow. Radial precompression of between about 12% and 20% of the elastomer section **130** provides effective sealing, although radial precompression substantially between 5% and 30% can also be sufficient. The use of traditional sealing beads incorporated into the outer elastomer contour **134,** in addition to radial precompression of the elastomer **130,** provides for similar results. The radial precompression of the elastomer section **130** provides sealing even during use in low-temperature environments affecting the different materials' coefficient of thermal expansion. This approach creates a tight seal over a large area. In addition, in some embodiments, a vacuum is used during the assembly process to control the amount of negative or positive pressure in the assembled mount.

Furthermore, in combination with or in addition to the pull-out prevention provided by the collar **310,** radially crimping the outer cup **200** provides an additional pull-out limiting effect that has safety benefits. When the outer cup **200** is radially crimped, the outer cup **200** has a smaller diameter at the crimped portion than the outer diameter of the damping plate **140** (e.g. Figure 6). This acts as a safety precaution by preventing separation of the damping plate **140** from the outer cup **200,** even if elastomeric failure were to occur. In addition, the positioning of the collar **310** about the elastomer section **130** reinforces this pull-out prevention. As shown in Figures 1 and 6, for example, the collar **310** can be positioned about the portion of the outer cup **200** that is crimped about the elastomer contour **134.** In this configuration, the collar **310** acts to further reinforce the precompression of the elastomer section **130** at the elastomer contour **134** and to prevent deformation of the outer cup **200** by the damping plate **140** if the inner member **110** were subjected to a high upward axial load. In this way, the crimping of the outer cup **200** and the positioning of the collar **310** act together to prevent pull-out of the inner member **110.** Alternatively, as shown in Figure 2, the collar **310** can be positioned above the flange **210** of the outer cup **200.** In this configuration, the crimped portion of the outer cup **200** provides a first barrier for the damper plate **140** to pass when the inner member **110** is subjected to a high upward axial load, but even if the crimped cup is unable to keep the damping plate **140** in place, the collar **310** provides a secondary level of pull-out prevention.

In each configuration of the fluid mounts **100** and **102,** an upper portion of the inner member **110** is configured to be coupled to a top plate assembly **150,** which provides a point of connection to a supporting structure, such as a cab of an off-highway vehicle. In particular, the inner member **110** is configured to receive a top plate fastener **152** (e.g. a bolt as illustrated in Figures 1 and 2). In one aspect shown in Figure 3, for example, an upper blind threaded hole **112** longitudinally extends from a top surface of the inner member **110** towards a center of the inner member **110,** for a specified depth, that varies based on the length, size and/or shape of the top plate fastener **152** being used. The dimensions of the blind threaded hole **112** are selected based on the parameters of a given application. When blind threaded hole **112** is a through hole and the fluid mount **100** or **102** is sealed, the diameter and/or depth of the blind threaded hole **112** is selectable so that the volume of air available within the fluid mount **100** or **102** can be increased or decreased. The dimensions of the blind threaded hole **112** are selected during manufacturing. As shown in Figure 3, however, in some embodiments, the depth of the upper blind threaded hole **112** terminates at a partition **114** so that it does not connect with the lower blind threaded hole **116.** In this way, the partition **114** helps to seal the viscous fluid **F** within the closed end of the outer cup **200,** and is further operable to improve the rigidity of the inner member **110.**

In addition to providing a load path between the top plate assembly **150** and the supporting frame structure **300,** the fluid mounts **100** and **102** acts as a "dashpot" damper to remove energy of motion of the cab with respect to the frame. Specifically, the particular configurations of the fluid mounts **100** and **102** disclosed herein provide a "soft ride" operating zone designed to the natural frequency of the components of the mounts. Specifically, for example, in some embodiments, the materials and configurations of the inner member **110,** the elastomer section **130,** the ring **120** (if provided), the damper plate **140,** and the viscous fluid **F** are selected based on a natural frequency range from about 8 Hz to about 10 Hz (e.g., having a nominal natural frequency of about 9 Hz).

Furthermore, the configurations of the fluid mounts **100** and **102** disclosed herein additionally provide a motion-controlling "snubbing" region in both the axial and radial directions to allow for limited cab movement with respect to the frame of the vehicle. As used herein, the term "snubbing" means reducing or stopping movement between fixed and movable portions of a vehicle (e.g., the frame and the cab) by absorbing kinetic energy therebetween by engaging stiffer elements after a certain deflection. In the configurations disclosed herein, for example, this engagement of stiffer elements is achieved via the elastomeric profile member of the vehicle mount devices described herein. Specifically, the elastomeric profile part can include snubbing surfaces for absorbing and/or dissipating kinetic energy. Thus, in some aspects, "snubbing" is a form of shock absorbing.

In the particular embodiments disclosed herein and illustrated in Figure 6, for instance, the elastomeric profile **130** includes a first snubbing contact surface **132** (upward-facing surface in Figure 6), a second snubbing contact surface **136** (downward-facing surface in Figure 6), and a third snubbing surface that is positioned radially-inward on the elastomeric profile **130** (e.g., at elastomer contour **134**). The first and second snubbing contact surfaces **132** and **136** are adapted to control axial downward and upward motion, respectively, and are customizable during manufacturing for adapting to application needs via altering the contact locations of the elastomeric profile **130.** As used herein, customizable refers to the specific vehicle size, weight, use and ride characteristics desired by the customer.

In this configuration, where fluid mount **100** or **102** is secured to a top plate assembly **150** as shown in Figure 6, after a certain downward deflection, top plate assembly **150** engages an upper portion of elastomer section **130** at the first snubbing contact surface **132,** which results in an increase in the downward mount stiffness. Similarly, after a certain upward deflection, the damping plate **140** engages the bottom portion of the elastomer section **130** at the second snubbing contact surface **136,** which results in an increase in the upward mount stiffness increases. In addition, in either event, the crimped cup **200** provides a surface (e.g., angled) that reacts the load in each of these upward and downward snubbing portions of the elastomer **130.** Snubbing is beneficial in broadband fluid mounts used in cab mount applications because it helps to limit overall cab motion.

Further, in configurations in which at portion of the outer cup **200** is crimped about an elastomer contour **134** of the elastomer section **130,** the decreased cup diameter **D₁** resulting from radially crimping the outer cup **200** is also operable to react the downward and upward snubbing loads. Specifically, the wall of the crimped cup between the original cup diameter **D₀** and the decreased cup diameter **D₁** react with the snubbing load transmitted into the precompressed elastomer section **130** from the inner member **110** and snubbing elements.

The present subject matter can be embodied in other forms without departing from the essential characteristics thereof. The embodiments described therefore are to be considered in all respects as illustrative and not restrictive. Although the present subject matter has been described in terms of certain preferred embodiments, other embodiments that are apparent to those of ordinary skill in the art are also within the scope of the present subject matter.

## Claims

1. A damping fluid mount (100, 102) comprising:
an inner member (110);
an elastomer section (130) that is affixed to an outer surface of the inner member (110);
an annular damping plate (140) attached to a bottom portion of the inner member (110);
a cup (200) containing viscous fluid (F) positioned about the elastomer section (130) and the damping plate (140); and
a collar (310) positioned about a portion of the elastomer section (130), the collar (310) having an inner diameter that is less than an outer diameter of the damping plate (140);
wherein a portion of the cup (200) is radially crimped into a portion of the elastomer section (130), wherein the portion of the elastomer section (130) is precompressed;
and
wherein the mount is **characterized in that**: an outer diameter of the annular damping plate (140) is greater than an inner diameter of the portion of the cup (200) that is crimped.

2. The damping fluid mount of claim 1, wherein radial precompression of the precompressed portion of elastomer section (130) ranges between about 5% and about 30% of an uncompressed thickness of the elastomer section (130);

3. The damping fluid mount of claim 2, wherein radial precompression of the precompressed portion of elastomer section (130) is between about 12% and about 20% of the uncompressed thickness of the elastomer section (130);

4. The damping fluid mount (100, 102) of claim 1, wherein the collar (310) is positioned about the portion of the cup (200) that is crimped.

5. The damping fluid mount (100, 102) of claim 1, wherein the cup (200) is positioned about a lower portion of the elastomer section (130) and the damping plate (140), but an upper portion of the elastomer section (130) is not contained within the cup (200); and
wherein the collar (310) is positioned about the upper portion of the elastomer section (130).

6. The damping fluid mount (100, 102) of claim 1, further comprising a ring (120) integrated within the elastomer contour (134) and crimped to conform to the elastomer contour (134);
wherein a diameter of the ring (120) is greater than an inner diameter of the crimped portion of the cup (200).

7. The damping fluid mount (100, 102) of claim 1, wherein the elastomer section (130) comprises an elastomer material selected to have an elastic modulus corresponding to a desired 1G static load rating.

8. The damping fluid mount (100, 102) of claim 1, wherein the cup (200) contains a ratio of viscous fluid (F) and air corresponding to a desired load response at expected operating frequencies.

9. The damping fluid mount (100, 102) of claim 1, wherein the cup (200) comprises a flange (210) at an open end of the cup (200); and
wherein the collar (310) is secured to the flange (210).

## Patentansprüche

1. Eine Dämpfungsfluidhalterung (100, 102), die Folgendes beinhaltet:
eine innere Komponente (110);
einen elastomeren Teilabschnitt (130), der an einer äußeren Oberfläche der inneren Komponente (110) befestigt ist;
eine ringförmige Dämpfungsplatte (140), die an einem unteren Abschnitt der inneren Komponente (110) angebracht ist;
eine Schale (200), die ein viskoses Fluid (F) enthält, das um den elastomeren Teilabschnitt (130) und die Dämpfungsplatte (140) positioniert ist; und
einen Kragen (310), der um einen Abschnitt des elastomeren Teilabschnitts (130) positioniert ist, wobei der Kragen (310) einen inneren Durchmesser aufweist, der kleiner als ein äußerer Durchmesser der Dämpfungsplatte (140) ist;
wobei ein Abschnitt der Schale (200) radial in einen Abschnitt des elastomeren Teilabschnitts (130) gefalzt ist, wobei der Abschnitt des elastomeren Teilabschnitts (130) vorverdichtet ist;
und
wobei die Halterung **dadurch gekennzeichnet ist, dass**: ein äußerer Durchmesser der ringförmigen Dämpfungsplatte (140) größer als ein innerer Durchmesser des Abschnitts der Schale (200), der gefalzt ist, ist.

2. Dämpfungsfluidhalterung gemäß Anspruch 1, wobei die radiale Vorverdichtung des vorverdicheten Abschnitts des elastomeren Teilabschnitts (130) im Bereich von zwischen etwa 5 % und etwa 30 % einer unverdichteten Dicke des elastomeren Teilabschnitts (130) liegt.

3. Dämpfungsfluidhalterung gemäß Anspruch 2, wobei die radiale Vorverdichtung des vorverdicheten Abschnitts des elastomeren Teilabschnitts (130) zwischen etwa 12 % und etwa 20 % der unverdichteten Dicke des elastomeren Teilabschnitts (130) liegt.

4. Dämpfungsfluidhalterung (100, 102) gemäß Anspruch 1, wobei der Kragen (310) um den Abschnitt der Schale (200), der gefalzt ist, positioniert ist.

5. Dämpfungsfluidhalterung (100, 102) gemäß Anspruch 1, wobei die Schale (200) um einen unteren Abschnitt des elastomeren Teilabschnitts (130) und der Dämpfungsplatte (140) positioniert ist, aber ein oberer Abschnitt des elastomeren Teilabschnitts (130) nicht in der Schale (200) enthalten ist; und
wobei der Kragen (310) um den oberen Abschnitt des elastomeren Teilabschnitts (130) positioniert ist.

6. Dämpfungsfluidhalterung (100, 102) gemäß Anspruch 1, die ferner einen Ring (120) beinhaltet, der in der elastomeren Kontur (134) integriert ist und gefalzt ist, um sich der elastomeren Kontur (134) anzupassen;
wobei ein Durchmesser des Rings (120) größer als ein innerer Durchmesser des gefalzten Abschnitts der Schale (200) ist.

7. Dämpfungsfluidhalterung (100, 102) gemäß Anspruch 1, wobei der elastomere Teilabschnitt (130) ein elastomeres Material beinhaltet, das ausgewählt ist, um ein Elastizitätsmodul, das einer gewünschten statischen Tragzahl 1G entspricht, aufzuweisen.

8. Dämpfungsfluidhalterung (100, 102) gemäß Anspruch 1, wobei die Schale (200) ein Verhältnis von viskosem Fluid (F) und Luft, das einem gewünschten Tragverhalten an erwarteten Betriebsfrequenzen entspricht, enthält.

9. Dämpfungsfluidhalterung (100, 102) gemäß Anspruch 1, wobei die Schale (200) einen Flansch (210) an einem offenen Ende der Schale (200) beinhaltet; und
wobei der Kragen (310) an dem Flansch (210) gesichert ist.

## Revendications

1. Un support à fluide d'amortissement (100, 102) comprenant :
un organe interne (110) ;
une section élastomère (130) qui est fixée à une surface externe de l'organe interne (110) ;
une plaque d'amortissement annulaire (140) attachée à une portion de dessous de l'organe interne (110) ;
une coupelle (200) contenant du fluide visqueux (F) positionnée autour de la section élastomère (130) et de la plaque d'amortissement (140) ; et
une collerette (310) positionnée autour d'une portion de la section élastomère (130), la collerette (310) ayant un diamètre interne qui est inférieur à un diamètre externe de la plaque d'amortissement (140) ;
où une portion de la coupelle (200) est sertie radialement dans une portion de la section élastomère (130), où la portion de la section élastomère (130) est précomprimée ;
et
où le support est **caractérisé en ce que** : un diamètre externe de la plaque d'amortissement annulaire (140) est supérieur à un diamètre interne de la portion de la coupelle (200) qui est sertie.

2. Le support à fluide d'amortissement de la revendication 1, où une précompression radiale de la portion précomprimée de section élastomère (130) est comprise dans l'intervalle entre environ 5 % et environ 30 % d'une épaisseur non comprimée de la section élastomère (130).

3. Le support à fluide d'amortissement de la revendication 2, où une précompression radiale de la portion précomprimée de section élastomère (130) est comprise entre environ 12 % et environ 20 % de l'épaisseur non comprimée de la section élastomère (130).

4. Le support à fluide d'amortissement (100, 102) de la revendication 1, où la collerette (310) est positionnée autour de la portion de la coupelle (200) qui est sertie.

5. Le support à fluide d'amortissement (100, 102) de la revendication 1, où la collerette (200) est positionnée autour d'une portion inférieure de la section élastomère (130) et de la plaque d'amortissement (140), mais une portion supérieure de la section élastomère (130) n'est pas contenue à l'intérieur de la coupelle (200) ; et
où la collerette (310) est positionnée autour de la portion supérieure de la section élastomère (130).

6. Le support à fluide d'amortissement (100, 102) de la revendication 1, comprenant en outre un anneau (120) intégré à l'intérieur du contour élastomère (134) et serti afin d'épouser le contour élastomère (134) ;
où un diamètre de l'anneau (120) est supérieur à un diamètre interne de la portion sertie de la coupelle (200).

7. Le support à fluide d'amortissement (100, 102) de la revendication 1, où la section élastomère (130) comprend un matériau élastomère sélectionné pour avoir un module élastique correspondant à une capacité de charge statique de 1G souhaitée.

8. Le support à fluide d'amortissement (100, 102) de la revendication 1, où la coupelle (200) contient un rapport de fluide visqueux (F) et d'air correspondant à une réponse à la charge souhaitée à des fréquences de fonctionnement attendues.

9. Le support à fluide d'amortissement (100, 102) de la revendication 1, où la coupelle (200) comprend une bride (210) au niveau d'une extrémité ouverte de la coupelle (200) ; et
où la collerette (310) est assujettie sur la bride (210).
